# EUROPÄISCHE PATENTSCHRIFT

(11) **EP 1 129 297 B1**
(45) Veröffentlichungstag und Bekanntmachung des Hinweises auf die Patenterteilung: **24.04.2002**
(21) Anmeldenummer: 99953965.3
(22) Anmeldetag: 04.11.1999
(51) Int. Cl.: F16B 25/00

(54) **KORROSIONSFESTE SCHRAUBE MIT SCHNEIDEINSATZ**
CORROSION-RESISTANT SCREW WITH A CUTTING INSERT
VIS RESISTANTE A LA CORROSION DOTEE D'UN INSERT DE FILETAGE

(30) Priorität: 13.11.1998 DE 19852338
(43) Veröffentlichungstag der Anmeldung: 05.09.2001
(73) Patentinhaber: TOGE-Dübel A. Gerhard KG, 90431 Nürnberg (DE)
(72) Erfinder: GERHARD, Anton, D-90427 Nürnberg (DE)
(74) Vertreter: Rau, Albrecht
(86) Internationale Anmeldenummer: EP9908458
(87) Internationale Veröffentlichungsnummer: WO0029754

(56) Entgegenhaltungen:
- WO-A-96/16274
- US-A- 5 385 439

## Beschreibung

Die Erfindung betrifft eine korrosionsfeste, gewindeschneidende Schraube gemäß dem Oberbegriff des Anspruchs 1.

Aus der DE 44 17 921 A1 ist eine Schraube bekannt. Diese besteht aus einem ersten Schraubenteil aus einem korrosionsbeständigen Stahl sowie einem zweiten, an das Ende des ersten Schraubenteils angesetzten Schraubenteil aus einem gehärteten Stahl. Die beiden Schraubenteile sind kraftschlüssig miteinander verbunden und weisen an ihrem Außenumfang ein Gewinde auf. Diese Ausgestaltung hat den Nachteil, daß bei großen, auf das Gewinde wirkenden Einschraub-Kräften im wesentlichen senkrecht zur Mittel-Längs-Achse die Verbindung zwischen dem ersten und dem zweiten Schraubenteil zerstört wird.

Aus der WO 96/16 274 ist eine gattungsgemäße selbstschneidende Schraube bekannt. Diese weist einen zylindrischen Kern auf, in dem eine axiale Nut vorgesehen ist, die hinsichtlich ihrer Tiefe bis zur Mittel-Längs-Achse reicht und bei einigen Ausführungsformen den Kern vollständig durchdringt. In die Nut ist ein flaches, längliches Einsatzteil eingesetzt. Das Gewinde der Schraube ist derart ausgestaltet, daß das mit dem Kern einteilig ausgebildete Gewinde harmonisch in das Gewindeprofil entlang des Einsatzteiles übergeht. Die Herstellung der Schraube erfolgt derart, daß in einen aus rostfreiem Stahl bestehenden, im wesentlichen zylindrischen Schraubenschaft mit einer axialen Nut ein vorgestanztes flaches Einsatzteil aus einem haltbaren Stahl eingesetzt und dort festgelegt wird. Anschließend wird das Gewinde z. B. durch Walzen eingeformt. Anschließend erfolgt das Härten des Einsatzteils. Die hieraus bekannte Schraube weist zahlreiche Nachteile auf. Da die axiale Nut hinsichtlich ihrer Tiefe bis zur Mittel-Längs-Achse und zum Teil darüber hinaus verläuft, wird der Kern hierdurch teilweise durchtrennt und damit hinsichtlich seiner Eindrehstabilität stark beeinträchtigt. Besonders bei Betonschrauben sind für das Eindrehen sehr hohe Drehmomente erforderlich, die auf den Kern wirken. Ferner können lediglich entlang einer oder höchstens entlang zweier gegenüberliegender Mantellinien gehärtete Schneidelemente im Gewinde erzeugt werden, da eine weitere Durchtrennung des Kerns, z. B. mit um 120 ° gegeneinander versetzten Nuten, nicht möglich ist. Selbst bei zwei gegenüberliegenden Nuten liegt bereits fast eine vollständige Durchtrennung des Kernes vor, so daß dieser stark geschwächt ist. Darüber hinaus geht das Gewindeprofil entlang des Einsatzteiles harmonisch in das einteilig mit dem Kern ausgebildete Gewinde über, d. h. es gibt keine Schneidköpfe im eigentlichen Sinne, die gegenüber dem Gewinde vorstehen und somit eine besonders bei Beton erforderliche verstärkte Schneidfunktion besitzen.

Aus der US 5 385 439 ist eine gewindeformende Schraube bekannt. Diese weist entlang eines kleinen Teils ihres Gewindes Formelemente auf, die radial gegenüber dem Gewinde vorstehen. Die Formelemente sind einteilig mit dem Kern und dem Rest des Gewindes ausgebildet. Nachteilig hieran ist, daß die Schraube, sofern die Formelemente eine ausreichende Härte zum Schneiden von Stein aufweisen sollen, nicht korrosionsbeständig ist, da nur nicht-korrosionsbeständige Stähle härtbar sind. Auf der anderen Seite erfüllen nicht-korrosionsbeständige Schrauben nicht die durch Sicherheitsnormen festgelegten Erfordernisse hinsichtlich der Dauerhaltbarkeit z. B. in Feuchtigkeit ausgesetztem Beton.

Der vorliegenden Erfindung liegt die Aufgabe zugrunde, eine gattungsgemäße Schraube zu verbessern, so daß deren Stabilität auch bei großen Einschraub-Kräften gewährleistet ist.

Diese Aufgabe wird durch die Merkmale des kennzeichnenden Teils des Anspruchs 1 gelöst. Der Kern der Erfindung besteht darin, in einer im wesentlichen aus einem korrosionsfesten Metall bestehenden Schraube Schneid-Elemente mit Schneideköpfen aus einem gehärteten Metall vorzusehen, wobei die Schneidköpfe in dem Gewinde angeordnet sind und die Schneid-Elemente in den Kern kippstabil eingesetzt sind. Auf die Weise sind die Schneidköpfe auch durch große Reibungskräfte an der Bohrlochwand belastbar, während gleichzeitig das Gewinde entlang seines überwiegenden Teils korrosionsfest ist und somit auf Dauer keinen Schaden nehmen kann.

Weitere vorteilhafte Ausgestaltungen der Erfindung ergeben sich aus den Unteransprüchen.

Zusätzliche Vorteile und Einzelheiten ergeben sich aus der Beschreibung dreier Ausführungsbeispiele anhand der Zeichnung. Es zeigen:
- Fig. 1: eine Draufsicht auf eine Schraube mit Schneid-Element gemäß einer ersten Ausführungsform,
- Fig. 2: eine Querschnittsdarstellung der Schraube gemäß der Schnittlinie II-II in Fig. 1,
- Fig. 3: eine Seitenansicht eines Schneid-Elements gemäß der ersten Ausführungsform,
- Fig. 4: eine Draufsicht auf das Schneid-Element gemäß Fig. 3,
- Fig. 5: eine Draufsicht auf eine Schraube mit Schneid-Element gemäß einer zweiten Ausführungsform,
- Fig. 6: eine Querschnittsdarstellung der Schraube gemäß der Schnittlinie VI-VI in Fig. 5,
- Fig. 7: eine Teilschnittdarstellung der Schraube gemäß der Schnittlinie VII-VII in Fig. 5,
- Fig. 8: eine Draufsicht auf ein Schneid-Element gemäß der zweiten Ausführungsform,
- Fig. 9: eine Draufsicht auf eine Schraube mit Schneid-Element gemäß einer dritten Ausführungsform,
- Fig. 10: eine Querschnittsdarstellung der Schraube gemäß der Schnittlinie X-X in Fig. 9,
- Fig. 11: eine Teilschnittdarstellung der Schraube gemäß der Schnittlinie XI-XI in Fig. 9 und
- Fig. 12: eine Draufsicht auf eine Schraube gemäß dem Sichtpfeil XII in Fig. 10.

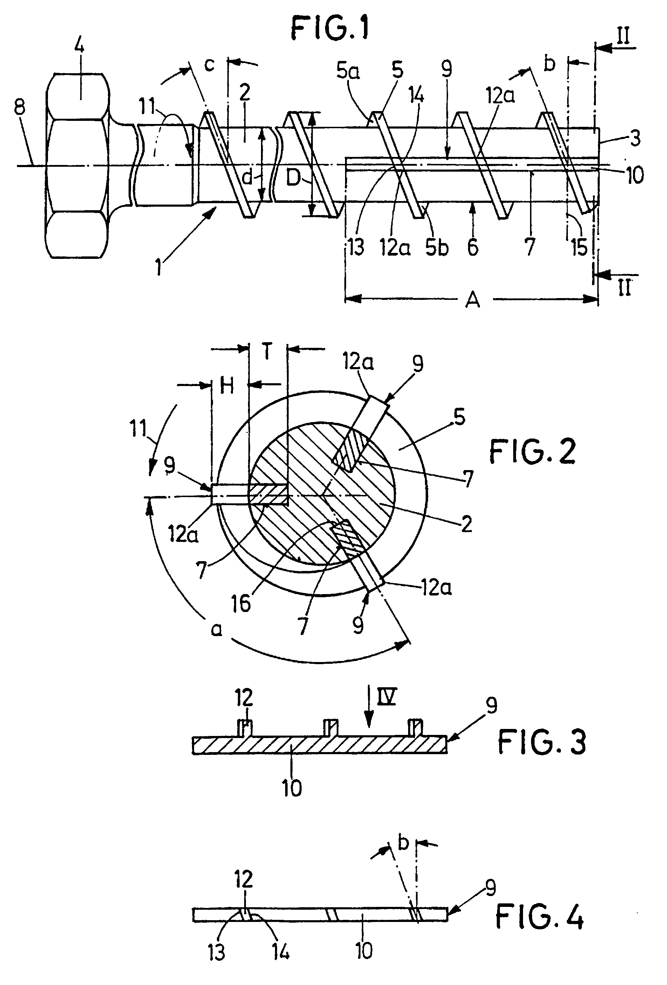

Im folgenden wird unter Bezugnahme auf die Fig. 1 bis 4 eine erste Ausführungsform einer erfindgungsgemäßen Schraube 1 beschrieben. Die Schraube 1 weist einen zylindrischen Kern 2 auf, der im Bereich des Anfangs 3 der Schraube 1 angefast sein kann. Am entgegengesetzten Ende des Kerns 2 ist ein beliebig auszubildender Schraubenkopf 4 vorgesehen. Auf dem Kern 1 ist ein stegartig ausgebildetes Gewinde 5 mit Gewinde-Flanken 5a, 5b ausgeformt, dessen Außendurchmesser D 1,0 bis 2,5 mm größer ist als der Nenndurchmesser einer Bohrung, in die die Schraube 1 eingeschraubt werden soll. Der Nenndurchmesser einer Bohrung ist international genormt, beträgt also 4, 5, 6, 8, 10, 12, 14, 16, ... mm.

Der Kern 2 weist entlang eines Abschnitts 6, der sich vom Anfang 3 über einen Teil der Länge des Gewindes 5 erstreckt, drei Aufnahme-Nuten 7 mit rechteckigem Querschnitt und größerer Tiefe als Breite auf. Diese verlaufen im wesentlichen parallel zur Mittel-Längs-Achse 8 der Schraube 1 und sind radial nach außen offen. Jeweils benachbarte Aufnahme-Nuten 7 schließen bezüglich der Mittel-Längs-Achse 8 gleiche Winkelabstände a von 120 ° ein. Es ist möglich, statt drei eine beliebige andere Zahl von Aufnahme-Nuten 7 vorzusehen, wobei der Winkelabstand a zwischen benachbarten Aufnahme-Nuten 7 dann jeweils 360 ° dividiert durch die Zahl der Aufnahme-Nuten 7 beträgt. Der Kern 2, der Schraubenkopf 4 und das Gewinde 5 sind einteilig aus einem korrosionsfesten Stahl, insbesondere VA-Stahl, ausgebildet.

Die Schraube 1 weist entsprechend der Zahl der Aufnahme-Nuten 7 Schneid-Elemente 9 mit jeweils einer Schneid-Einsatz-Leiste 10 auf, die im wesentlichen entlang der Einschraub-Drehrichtung 11 der Schraube 1 formschlüssig und kippstabil in jeweils einer Aufnahme-Nut 7 gehalten sind. Die Schneid-Einsatz-Leiste 10 weist einen rechteckigen, zu dem der Aufnahme-Nut 7 passenden Querschnitt auf. Die Schneid-Einsatz-Leiste 10 ist in radialer Richtung durch Reibschluß oder durch Einkleben in der Aufnahme-Nut 7 gehalten. Radial von der Mittel-Längs-Achse 8 nach außen abstehend sind einteilig mit der Schneid-Einsatz-Leiste 10 ausgebildete Schneidköpfe 12 vorgesehen, die in dem Gewinde 5 angeordnet sind. Die Schneidköpfe 12 weisen im wesentlichen parallel zueinander verlaufende und im wesentlichen senkrecht zur Mittel-Längs-Achse 8 verlaufende Flanken 13, 14 sowie eine Schneid-Kante 12a auf. Diese sind bezüglich einer senkrecht zur Mittel-Längs-Achse 8 verlaufenden Ebene 15 um einen Winkel b geneigt, der dem Steigungswinkel c des Gewindes 5 bezüglich der Ebene 15 entspricht. Die Schneidköpfe 12 folgen somit kontinuierlich dem Gewinde 5, wobei die Flanken 13, 14 nicht über Gewinde-Flanken 5a, 5b hervorstehen. Die Schneid-Einsatz-Leiste 10 und die Schneidköpfe 12 sind aus einem gehärteten, in der Regel nicht korrosionsfesten Stahl hergestellt.

Bezüglich der Größenverhältnisse der einzelnen Teile der Schraube 1 gilt folgendes: Die Tiefe T der Aufnahme-Nut 7 ist derart gewählt, daß sie die Schneid-Einsatz-Leiste 10 vollständig aufnimmt. Die Höhe H der Schneideköpfe 12 bezogen auf den Außenumfang des Kerns 2 ist derart gewählt, daß diese gegenüber dem Außenumfang des Gewindes 5 um ungefähr 0,05 bis 0,4 mm, insbesondere 0,1 - 0,2 mm, überstehen. Die Tiefe T der Aufnahme-Nut 7 ist ferner in Relation zum Durchmesser d des Kerns 2 derart gewählt, daß die jeweiligen Nut-Grunde 16 der drei Aufnahme-Nuten 7 ausreichend voneinander beabstandet sind, so daß die Gesamtstabilität des Kerns 2 nicht beeinträchtigt wird. Die Länge A des Abschnitts 6 ist derart gewählt, daß sich die Schneid-Einsatz-Leiste 10 über drei Gewindegänge erstreckt und somit drei Schneideköpfe 12 aufweist. Es ist jedoch auch möglich, entsprechend längere Schneid-Einsatz-Leisten 10 mit zusätzlichen Schneideköpfe 12 vorzusehen.

Beim Eindrehen der Schraube 1 in ein Bohrloch kommen die SchneidKanten 12a der überstehenden Schneideköpfe 12 in schneidenden Eingriff mit der Wand des Bohrlochs. Das im Vergleich zu den Schneideköpfen 12 weiche Gewinde 5 verformt sich beim Einschrauben geringfügig und wird an der Bohrlochwand abgerieben. Aufgrund der größeren Härte der Schneideköpfe 12 gegenüber dem Gewinde 5 ist die Abnutzung der Schneideköpfe 12 erheblich geringer, so daß deren Schneidwirkung bis zum vollständigen Einschrauben der Schraube 1 erhalten bleibt. Sofern die in das Bohrloch eingeschraubte Schraube 1 korrodierende Medien, insbesondere Feuchtigkeit, ausgesetzt ist, werden lediglich die Schneid-Elemente 9 mit der Zeit zerstört. Das Gewinde 5 der korrosionsfesten Schraube 1 bleibt jedoch korrosionsfrei, weshalb die Schraube 1 ihren Halt im Bohrloch nicht verliert.

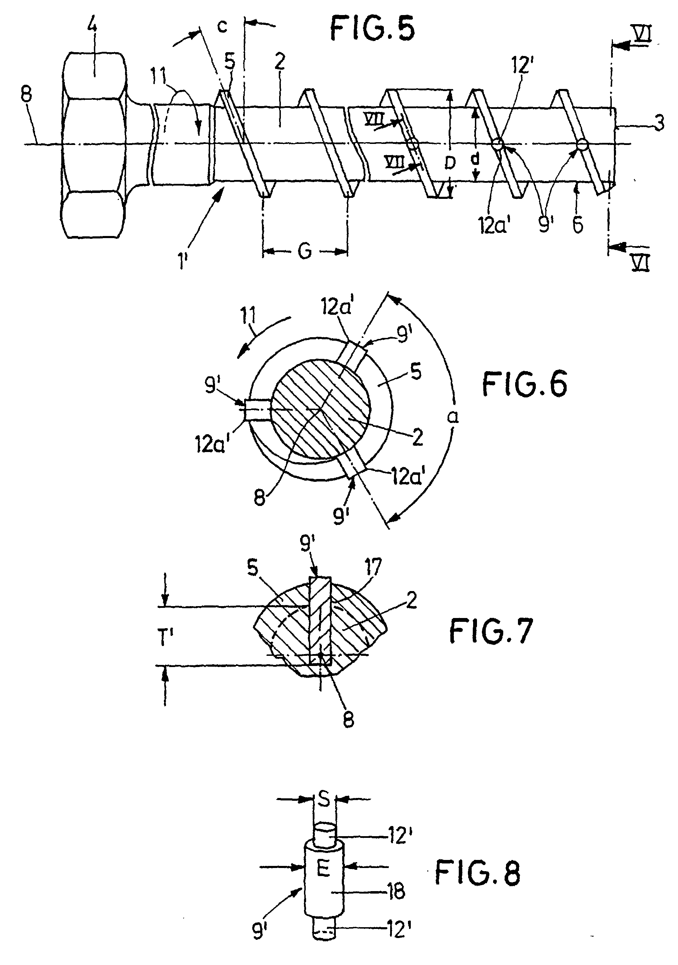

Im folgenden wird unter Bezugnahme auf die Fig. 5 bis 8 eine zweite Ausführungsform der Erfindung beschrieben. Gegenüber der ersten Ausführungsform identische Teile werden mit denselben Bezugszeichen und verschiedene, jedoch funktionell gleichwertige Teile werden mit denselben Bezugszeichen mit einem hochgesetzten Strich versehen. Ansonsten wird auf die Beschreibung zur ersten Ausführungsform verwiesen.

Die Schraube 1' weist radial zur Mittel-Längs-Achse 8 durch das Gewinde 5 und einen Teil des Kerns 2 verlaufende, einseitig nach außen offene als Sackloch ausgebildete Aufnahme-Bohrungen 17 auf. Die Bohrungen 17 sind, dem Gewinde 5 folgend bezüglich der Mittel-Längs-Achse 8 jeweils um einen konstanten Winkel a gegeneinander versetzt, im vorliegenden Fall um a = 120 °. In diesem Fall liegen mehrere Aufnahme-Bohrungen 17, im vorliegenden Fall drei Aufnahme-Bohrungen 17, in einer Ebene, in der auch die Mittel-Längs-Achse 8 liegt. Die Tiefe T' der Aufnahme-Bohrung 17 bezogen auf den Außenumfang des Kerns 2 ist größer als d/2, d. h. die Aufnahme-Bohrung 17 erstreckt sich über die Mittel-Längs-Achse 8 hinaus. Anders als beim ersten Ausführungsbeispiel ist dies ohne Beeinträchtigung der Stabilität des Kerns 2 möglich, da am Gewinde 5 aufeinanderfolgende Aufnahme-Bohrungen 17 um ein Drittel der Ganghöhe G des Gewindes 5 voneinander beabstandet sind und somit einander nicht durchdringen. In den Aufnahme-Bohrungen 17 ist jeweils ein Schneid-Element 9' mit einem Schneid-Einsatz-Stift 18 entlang der Einschraub-Richtung 11 formschlüssig und in radialer Richtung reibschlüssig gehalten. Der in Fig. 8 nicht maßstabsgetreu dargestellte Schneid-Einsatz-Stift 18 ist zylindrisch ausgebildet und weist an den beiden entgegengesetzten Enden einteilig mit diesen ausgebildete zylindrische Schneideköpfe 12' auf, wobei der Durchmesser S der Schneideköpfe 12' ungefähr 1,3 mm und der Durchmesser E des Schneid-Einsatz-Stifts 18 ungefähr 1,5 mm beträgt und für die Differenz gilt: 0,05mm ≤ E - S ≤ 0,4 mm. Das Vorsehen des gegenüber E etwas geringeren Durchmessers S hat bei der Montage den Vorteil, daß ein Schneidkopf 12' einfach in eine Aufnahme-Bohrung 17 eingesetzt werden kann, bevor der Schneid-Einsatz-Stift 18 in die Aufnahme-Bohrung 17 geschlagen wird und in dieser in radialer Richtung durch Reibschluß gehalten ist. An beiden Enden des Schneid-Einsatz-Stiftes 18 ist jeweils ein Schneidkopf 12 vorgesehen, damit der Schneid-Einsatz-Stift 18 in beide Richtungen in die Aufnahme-Bohrung 17 eingeschlagen werden kann und es keines gegebenenfalls erforderlichen Umdrehens des Schneid-Einsatz-Stiftes 18 bedarf. Nach dem Einschlagen der Schneid-Einsatz-Stifte 18 in die Aufnahme-Bohrungen 17 werden die Schneideköpfe 12' auf Länge geschliffen, so daß diese, wie oben beschrieben, gegenüber dem Gewinde 5 hervorstehen. Der Schneidmechanismus beim Eindrehen der Schraube 1' in eine Bohrung ist wie bei der Schraube 1.

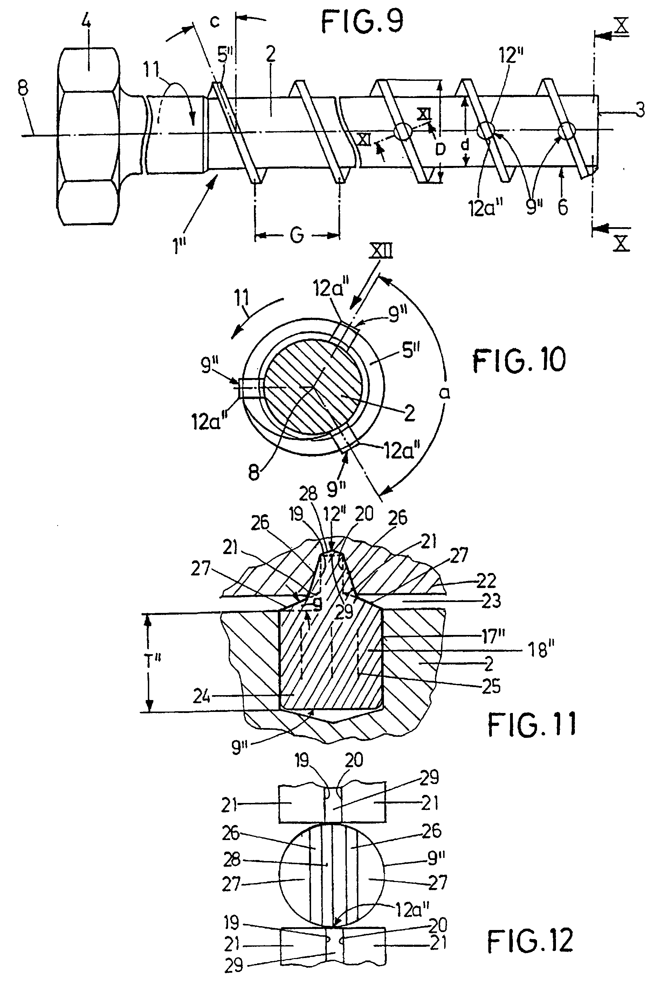

Im folgenden wird unter Bezugnahme auf die Fig. 9 bis 12 eine dritte Ausführungsform der Erfindung beschrieben. Identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit zwei hochgesetzten Strichen. Der wesentliche Unterschied gegenüber der zweiten Ausführungsform besteht in der Ausgestaltung des Schneid-Elements 9".

Das in Fig. 9 lediglich schematisch dargestellte Gewinde 5" weist, wie aus Fig. 11 erkennbar ist, zwei parallele Flanken 19, 20 auf, die mittels jeweils einer Fase 21 in den Kern 2 übergehen. Der Fasenwinkel g beträgt etwa 45°. In Fig. 11 ist eine Bohrlochwand 22 dargestellt, wobei erkennbar ist, daß die Fase 21 sich zumindest im wesentlichen im Bereich zwischen dem Kern 2 und der Bohrlochwand 22 befindet. Zwischen dem Kern 2 und der Bohrlochwand 22 ist eine Kammer 23 ausgebildet, durch die das beim Einschrauben der Schraube 1'' herausgeschnittene Material abtransportiert wird. Die Fase 21 ist ausschließlich aus festigkeitstechnischen Gründen vorgesehen.

Wie bei der zweiten Ausführungsform sind in dem Kern 2 einseitig nach außen offene, als Sackloch ausgebildete Aufnahmebohrungen 17" vorgesehen, deren Tiefe T" > d/2. In den Aufnahmebohrungen 17" sind die Schneid-Elemente 9" angeordnet. Diese weisen einen ringzylindrischen Schneid-Einsatz-Stift 18" auf, der umfangsseitig mit einer längs verlaufenden Rändelung 25 versehen ist. Am in Fig. 11 oben dargestellten Ende des Rundkörpers 24 ist ein stegartig ausgebildeter Schneidkopf 12" vorgesehen, der gegeneinander geneigte, ebene Schneid-Element-Flanken 26 aufweist, deren Längserstreckungs-Richtungen parallel zueinander verlaufen. Die Breite der Schneid-Element-Flanken 26 verjüngt sich in radialer Richtung. Die Schneid-Element-Flanken 26 sind derart angeordnet, daß sie in der in Fig. 11 dargestellten Projektion auf den Querschnitt des Gewindes 5'' über die Flanken 19, 20 vorstehen. Die Schneid-Element-Flanken 26 gehen über ebenfalls ebene Schneid-Element-Fasen 27 in den Stift 18" über. Die Schneid-Element-Fasen 27 schließen denselben Fasenwinkel g wie die Fasen 21 ein. Die zwischen den Schneid-Element-Flanken 26 liegende Schneid-Element-Außenfläche 28 ist abgefast ausgebildet und steht gegenüber der zwischen den Flanken 19 und 20 des Gewindes 5" angeordneten Außenfläche 29 hervor.

Zur Montage wird der Stift 18'' in die Aufnahmebohrung 17" gesteckt, so daß die Flanken 19, 20 des Gewindes 5" und die Schneid-Element-Flanken 26 hinsichtlich ihrer Längserstreckung parallel zueinander verlaufen. Die Rändelung 25 verhindert, daß eine Verdrehung des Stifts 18'' in der Aufnahmebohrung 17" stattfinden kann. Der Stift 18" ist in radialer Richtung bezogen auf die Achse 8 durch Reibschluß und senkrecht dazu durch Formschluß gehalten. Der Schneidmechanismus beim Eindrehen der Schraube 1" in eine Bohrung ist wie bei der Schraube 1'. Die in Einschraub-Drehrichtung 11 voreilenden, gegenüber dem Gewinde 5" insbesondere um 0,2 - 0,3 mm vorstehenden Kanten des Schneidkopfes 12" bilden die Schneidkanten 12a".

Besonders vorteilhaft ist, daß der Schneidkopf 12 hinsichtlich seiner Außenform zum einen im wesentlichen der Form des Gewindes 5'' folgt und. insofern ein gleichmäßiges Eindrehen der Schraube 1'' möglich ist. Zum anderen stellt der gegenüber dem Gewinde 5'' jeweils vorstehende Schneidkopf 12'' sicher, daß die Schneidarbeit im Mauerwerk primär durch ihn und nicht durch das Gewinde 5'' erfolgt. Da das Schneid-Element 9'' wie bei der ersten und zweiten Ausführungsform aus besonders gehärtetem Material besteht, ist der Verschleiß des weicheren, jedoch korrosionsfesten Gewindes 5" stark reduziert.

## Patentansprüche

1. Korrosionsfeste, gewindeschneidende Schraube, insbesondere Betonschraube, zum Einschrauben in die Bohrloch-Wand eines Bohrlochs
a) mit einem im wesentlichen zylindrischen Kern (2) aus korrosionsfestem Metall mit einer Mittel-Längs-Achse (8),
b) mit einem einstückig mit dem Kern (2) ausgebildeten Gewinde (5;5'')
c) mit mindestens einem Schneid-Element (9'; 9'') mit mindestens einem Schneidkopf (12'; 12") zum schneidenden Eingriff mit der Bohrloch-Wand,
d) wobei das mindestens eine Schneid-Element (9'; 9'')
i) in den Kern (2) eingesetzt ist,
ii) mit diesem fest verbunden ist und
iii) aus einem gehärteten Metall besteht und
e) wobei der mindestens eine Schneidkopf (12', 12") in dem Gewinde (5; 5") angeordnet ist, **dadurch gekennzeichnet, daß**
f) der mindestens eine Schneidkopf (12'; 12") radial zu der Mittel-Längs-Achse (8) gegenüber dem Gewinde (5; 5'') vorsteht,
g) der Kern (2) mindestens eine radial zur Mittel-Längs-Achse (8) verlaufende, nach außen offene Aufnahme-Bohrung (17; 17") aufweist, und
h) das mindestens eine Schneid-Element (9'; 9") als Schneid-Einsatz-Stift (18; 18'') mit mindestens einem damit einteilig ausgebildeten Schneidkopf (12'; 12") ausgebildet ist,
i) wobei der mindestens eine Schneid-Einsatz-Stift (18; 18'') in der mindestens einen Aufnahme-Bohrung (17; 17") gehalten ist.

2. Schraube gemäß Anspruch 1, **dadurch gekennzeichnet, daß** der Schneidkopf (12'; 12") gegenüber dem Gewinde (5; 5") um 0,05 bis 0,4 mm vorsteht.

3. Schraube gemäß Anspruch 1 oder 2, **dadurch gekennzeichnet, daß** jeder Schneidkopf (12'') im wesentlichen parallel zueinander verlaufende Schneid-Element-Flanken (26) aufweist.

4. Schraube gemäß Anspruch 3, **dadurch gekennzeichnet, daß** der Steigungswinkel des Gewindes (5'') und der Steigungswinkel der Schneid-Element-Flanken (26) jeweils bezogen auf eine senkrecht zur Mittel-Längs-Achse (8) verlaufende Ebene (15) im wesentlichen gleich sind.

5. Schraube gemäß Anspruch 1, **dadurch gekennzeichnet, daß** das Schneid-Element (9') im wesentlichen zylindrisch ausgebildet ist.

6. Schraube gemäß Anspruch 1, **dadurch gekennzeichnet, daß** der Schneidkopf (12") stegartig ausgebildet ist.

7. Schraube gemäß Anspruch 1, **dadurch gekennzeichnet, daß** der Schneidkopf (12'') gegenüber dem Gewinde (5") hervorsteht.

## Claims

1. A corrosion-resisting, self-tapping screw, in particular a concrete screw, to be driven into the wall of a bore, comprising
a) a substantially cylindrical core (2) of corrosion-resisting metal, which has a central longitudinal axis (8);
b) a thread (5; 5"), which is integral with the core (2); and
c) at least one cutting element (9'; 9"), which has at least one cutting head (12'; 12") for cutting engagement with the wall of the bore;
d) the at least one cutting element (9'; 9")
i) being inserted into the core (2),
ii) being tightly joined thereto, and
iii) consisting of a hardened metal; and
e) the at least one cutting head (12; 12'; 12") being disposed in the thread (5; 5"); **characterized in that**
f) the at least one cutting head (12'; 12") projects over the thread (5; 5") radially to the central longitudinal axis (8);
g) the core (2) comprises at least one externally open bore (17; 17"), which is radial to the central longitudinal axis (8); and
h) the at least one cutting element (9'; 9") is a cutting pin insert (18; 18") with at least one cutting head (12'; 12"), which is formed in a single piece therewith;
i) the at least one cutting pin insert (18; 18") being held in the at least one bore (17; 17").

2. A screw according to claim 1, **characterized in that** the cutting head (12'; 12") projects over the thread (5; 5") by 0.05 to 0.4 mm.

3. A screw according to claim 1 or 2, **characterized in that** each cutting head (12") comprises cutting element flanks (26) which are substantially parallel to each other.

4. A screw according to claim 3, **characterized in that** the lead angle of the thread (5") and the lead angle of the cutting element flanks (26) are substantially equal, each referred to a plane (15) perpendicular to the central longitudinal axis (8).

5. A screw according to claim 1, **characterized in that** the cutting element (9') is substantially cylindrical.

6. A screw according to claim 1, **characterized in that** the cutting head (12") has a rib-type shape.

7. A screw according to claim 1, **characterized in that** the cutting head (12") projects over the thread (5").

## Revendications

1. Vis résistante à la corrosion, comportant un filetage, en particulier vis de béton à visser dans une paroi de forure d'une forure
a) avec un noyau (2) essentiellement cylindrique en métal résistant à la corrosion avec un axe longitudinal médian (8),
b) avec un filetage (5, 5") formé en une seule partie avec le noyau (2),
c) avec au moins un élément de découpe (9', 9") avec au moins une tête de découpe (12', 12") destinée à entamer l'opération de découpe sur la paroi de forure,
d) l'élément de découpe (9', 9"), au moins au nombre d'un, étant
i) introduit dans le noyau (2),
ii) solidement relié avec celui-ci,
iii) en un métal trempé et
e) la tête de découpe (12', 12") au moins au nombre d'une étant placée dans le filetage (5, 5"), **caractérisée en ce que**
f) la tête de découpe (12', 12") au moins au nombre d'une est placée radialement par rapport à l'axe longitudinal médian (8) et par rapport au filetage (5, 5"),
g) le noyau (2) présente au moins une forure de réception (17, 17") ouverte vers l'extérieur et qui s'étend radialement par rapport à l'axe longitudinal médian (8),
h) l'élément de découpe (9', 9") au moins au nombre d'un est formé en tant que broche d'insertion de découpe (18, 18") avec au moins une tête de découpe (12', 12") qui forme une seule pièce avec lui,
i) la broche d'insertion de découpe (18, 18") au moins au nombre d'une étant maintenue dans la forure de réception (17, 17") au moins au nombre d'une.

2. Vis selon la revendication 1 **caractérisée en ce que** la tête de découpe (12', 12") forme une saillie de 0.5 à 0,4 mm en avant du filetage (5, 5").

3. Vis selon la revendication 1 ou 2 **caractérisée en ce que** chaque tête de découpe (12") présente des flancs d'élément de découpe (26) qui s'étendent pour l'essentiel parallèlement les uns par rapport aux autres.

4. Vis selon la revendication 3 **caractérisée en ce que** l'angle de montée du filetage (5") et l'angle de montée des flancs d'élément de découpe (26) sont essentiellement égaux chacun par rapport à un plan (15) qui s'étend horizontalement par rapport l'axe longitudinal médian (8).

5. Vis selon la revendication 1 **caractérisée en ce que** l'élément de découpe (9') est pour ('essentiel formé de façon cylindrique.

6. Vis selon la revendication 1 **caractérisée en ce que** la tête de découpe (12") est formée de façon rainurée.

7. Vis selon la revendication 1 **caractérisée en ce que** la tête de découpe (12") fait saillie par rapport au filetage (5").
